# EUROPÄISCHE PATENTSCHRIFT

(11) **EP 1 826 737 B1**
(45) Veröffentlichungstag und Bekanntmachung des Hinweises auf die Patenterteilung: **03.06.2015**
(21) Anmeldenummer: 07002791.7
(22) Anmeldetag: 09.02.2007
(51) Int. Cl.: G08G 1/0967, G08G 1/0968, G01C 21/36

(54) **Verfahren zur Ausgabe einer Hinweisnachricht in einem Fahrzeug**
Method for emitting a message in a vehicle
Procédé destiné à l'émission d'une information d'alerte dans un véhicule

(30) Priorität: 28.02.2006 DE 102006009091
(43) Veröffentlichungstag der Anmeldung: 29.08.2007
(73) Patentinhaber: Bayerische Motoren Werke Aktiengesellschaft, 80809 München (DE)
(72) Erfinder: Bachmaier, Peter, 85777 Grossnoebach (DE)

(56) Entgegenhaltungen:
- EP-A- 0 995 973
- EP-A- 1 045 224
- DE-A1- 19 938 261
- GB-A- 2 370 708
- US-A- 5 627 549
- US-A1- 2003 036 848

## Beschreibung

Die Erfindung betrifft ein Verfahren zur Ausgabe einer Hinweisnachricht in einem Fahrzeug und ein entsprechend eingerichtetes Fahrzeug.

Es sind Fahrzeuge mit Navigationssystemen bekannt, bei denen in Abhängigkeit von dem aktuell ermittelten Ort des Fahrzeuges eine Anzeigeeinrichtung gesteuert wird. Beispielsweise wird an der Anzeigeeinrichtung eine Kreuzung dargestellt, wenn sich das Fahrzeug in der Nähe der Kreuzung befindet. Bei aktivierter Zielführung wird zudem die richtige Route - der Kreuzungsdarstellung überlagert - hervorgehoben dargestellt. Zusätzlich ist es bekannt, den Fahrer akustisch durch die Ausgabe einer entsprechenden Sprachnachricht auf die richtige Route hinzuweisen. Die Ausgabe von Informationen basiert dabei auf fest, beispielsweise auf einer DVD, abgespeicherten Informationen, die - mit Ausnahme des Zielpunktes - durch den Fahrer nicht änderbar sind.

Es gibt daher Situationen, in denen diese bekannten Systeme den Fahrer nicht entsprechend seinen individuellen Wünschen führen. Beispielsweise will der Fahrer zu bestimmten Zeiten eine von seiner gewöhnlichen Route (bei deaktivierter Zielführung) abweichende Route oder eine von der - durch das Navigationssystem - vorgeschlagenen Route abweichende Route (bei aktivierter Zielführung) befahren. Gründe für diese Abweichung können in einer temporären Baustelle, einer Erledigung, die immer an einem bestimmten Wochentag der Woche zu erledigen ist, in einer besonderen Verkehrssituation, die nur zu bestimmten Zeiten vorliegt, oder in persönlichen Vorlieben des Fahrers für bestimmte Routen zu bestimmten Zeiten liegen.

Aus der EP0995973 A2 ist ein mobiles Gerät bekannt, durch das ein Nutzer automatisch auf einen point of interest hingewiesen wird, wenn er sich diesem nähert.

Aus der US5627549 ist ein Gerät bekannt, auf dem die Richtung und die Distanz zu einem bestimmten Ort angezeigt wird.

Der Erfindung liegt daher die Aufgabe zu Grunde, eine technische Lehre anzugeben, die es einem Fahrer eines Fahrzeuges erleichtert, die von ihm gewünschte Route zu befahren.

Diese Aufgabe wird durch die Merkmale der unabhängigen Ansprüche gelöst. Vorteilhafte Weiterbildungen der Erfindung sind den abhängigen Ansprüchen zu entnehmen. Im Rahmen der Erfindung liegen dabei auch Weiterbildungen des unabhängigen Fahrzeuganspruchs, die den abhängigen Verfahrensansprüchen entsprechen.

Die Erfindung basiert demnach auch auf dem Gedanken, den Fahrer an bestimmten Orten daran zu erinnern, abweichend von seiner gewohnten Route oder abweichend von der durch das Navigationssystem vorgeschlagenen Route eine andere Route zu befahren, nämlich die Route, die seinen individuellen Wünschen am ehesten entspricht. Diese Wünsche können dabei zeitabhängig oder situationsabhängig sein.

Zu diesem Zweck wird durch den Fahrer eine Zuordnung von auszugebender Erinnerung oder Hinweisnachricht zu einem Ort, an dem die Erinnerung erfolgen soll oder die Hinweisnachricht ausgegeben werden soll, eingerichtet oder ausgelöst. Die Erinnerung oder Ausgabe einer Hinweisnachricht erfolgt dann automatisch, wenn sich das Fahrzeug an dem Ort oder in der Nähe des Ortes befindet, welcher der Hinweisnachricht zugeordnet ist, und wenn ein weiteres fahrzeugbezogenes Kriterium erfüllt ist, wobei das fahrzeugbezogene Kriterium durch das Unterschreiten eines vorgegebenen Tankfüllstandes und/oder durch das Vorliegien einer bestimmten Sitzbelegung bestimmt ist.

Es wird damit dem Fahrer die Möglichkeit gegeben, einen Erinnerungspunkt, welcher einen bestimmten Ort mit einer Hinweisnachricht verknüpft, zu setzen. Basierend auf diesem gespeicherten Erinnerungspunkt erfolgt dann bei erneutem Aufenthalt des Fahrzeuges an diesem Ort, automatisch die Ausgabe der entsprechenden, vorzugsweise ortsabhängigen, Hinweisnachricht.

Die Hinweisnachricht oder mehrere Hinweisnachrichten sind in einer Speichereinrichtung abgespeichert oder zwischengespeichert. Bei den Hinweisnachrichten kann es sich um akustische, optische und/oder haptische Signale oder Meldungen handeln, die, beispielsweise durch den Fahrzeughersteller, vorgegeben sind oder durch den Fahrer ausgewählt oder generiert werden. Vorzugsweise umfasst eine Hinweisnachricht eine durch den Fahrer generierte Sprachnachricht. Die Erfindung umfasst aber auch die Generierung und Ausgabe von einfachen Signaltönen als Hinweisnachrichten.

Um die automatische Ausgabe einer solchen ortsabhängigen Erinnerung oder Hinweisnachricht möglichst einfach an die Wünsche des Fahrers eines Fahrzeuges anzupassen oder um die Einstellung einer solchen Erinnerung durch den Fahrer möglichst einfach, komfortabel und intuitiv zu gestalten, ist vorzugsweise vorgesehen, dass der Fahrer die Zuordnung einer Hinweisnachricht zu dem Ort, an dem die Hinweisnachricht auszugeben ist, während der Fahrt selbst auslöst oder einrichtet, indem er ein Betätigungselement betätigt. Mit der Betätigung des Betätigungselementes wird automatisch dem aktuell ermittelten Ort des Fahrzeuges, also dem Ort des Fahrzeuges zum Zeitpunkt der Betätigung des Betätigungselementes, eine Hinweisnachricht zugeordnet.

Vorzugsweise wird mit dem Betätigungselement die zuzuordnende Hinweisnachricht zuvor ausgewählt, generiert oder eingegeben. Besonders bevorzugt wird mit der Betätigung eines Betätigungselementes eine Sprachaufnahmevorrichtung aktiviert, um so eine Hinweisnachricht durch den Fahrer sprachlich einzugeben und abzuspeichern, und gleichzeitig die Zuordnung dieser Hinweisnachricht zu dem aktuell ermittelten Ort ausgelöst.

Bei dem Ort, dem eine Hinweisnachricht zugeordnet wird, kann es sich um den aktuellen Ort des Fahrzeuges handeln, einen Ort in der Nähe des aktuellen Ortes des Fahrzeuges handeln oder um einen Ort handeln, der in einem festen vorgegeben örtlichen oder zeitlichen Bezug zu dem aktuellen Ort des Fahrzeuges steht. Dazu werden vorzugsweise die durch das Fahrzeug befahrenen Strecken über einen vorgegebenen vergangenen Zeitraum zwischengespeichert.

Vorzugsweise wird durch die Betätigung eines Betätigungselementes einer Hinweisnachricht automatisch der Ort zugeordnet, der in Fahrtrichtung eine vorgegebene Entfernung oder eine vorgegebene Fahrstrecke oder eine vorgegebene Fahrzeit (bei Annahme einer vorgegebenen Geschwindigkeit oder bei Annahme der aktuellen Geschwindigkeit) vor dem aktuellen Ort liegt. Dadurch kann eine Betätigung oder eine verzögerte Betätigung eines Betätigungselementes zur Auslösung einer Zuordnung eines Ortes zu einer Hinweisnachricht, beispielsweise erst nach oder direkt an einem zu wählenden Abbiegepunkt, dennoch dazu führen, dass die entsprechende Hinweisnachricht beim nächsten Befahren der Route rechtzeitig, beispielsweise vor dem zu wählenden Abbiegepunkt, ausgegeben wird. Somit bleibt dem Fahrer nach der Erinnerung durch die Hinweisnachricht noch genügend Zeit, um beispielsweise die Fahrspur zu wechseln, um einen Fahrtrichtungsanzeiger zu betätigen, und um sich auf das Abbiegen von der gewohnten oder durch das Navigationssystem vorgeschlagenen Route vorzubereiten.

Zusätzlich zur Zuordnung eines Ortes zu einer Hinweisnachricht ist vorzugsweise vorgesehen, der Hinweisnachricht auch eine Fahrtrichtung zuzuordnen. Dabei handelt es sich vorzugsweise um die automatisch ermittelte aktuelle Fahrtrichtung des Fahrzeuges bei der Auslösung der Zuordnung eines Ortes und der Fahrtrichtung zu einer Hinweisnachricht, insbesondere um die automatisch ermittelte aktuelle Fahrtrichtung des Fahrzeuges bei der Betätigung des Betätigungselementes. Dadurch wird es möglich, die Erinnerung oder die Hinweisnachricht automatisch nicht nur am richtigen Ort auszugeben, sondern auch nur dann auszugeben, wenn sich das Fahrzeug in der passenden, nämlich im Wesentlichen in der abgespeicherten der Hinweisnachricht zugeordneten, Fahrtrichtung befindet.

Bei der Fahrtrichtung, der eine Hinweisnachricht zugeordnet wird, kann es sich um die aktuelle Fahrtrichtung des Fahrzeuges handeln oder um eine Fahrtrichtung handeln, die das Fahrzeug an einem Ort hatte, der in einem festen vorgegebenen örtlichen oder zeitlichen Bezug zu dem aktuellen Ort des Fahrzeuges steht. Dazu werden vorzugsweise die Fahrtrichtungen des Fahrzeuges über einen vorgegebenen vergangenen Zeitraum zwischengespeichert.

Vorzugsweise wird die Hinweisnachricht nicht ausgegeben, wenn sich das Fahrzeug nicht an dem Ort und/oder nicht in der Fahrtrichtung befindet, die der Hinweisnachricht zugeordnet ist.

Besonders bevorzugt wird die Hinweisnachricht nur dann ausgegeben, wenn ein in dem Fahrzeug integriertes Zielführungsmodul eines Navigationssystems deaktiviert ist.

Die der Erfindung zugrunde liegende Aufgabe wird auch gelöst durch ein Fahrzeug mit einer Ortsermittlungseinrichtung, welche beispielsweise einen GPS(Global Positioning System)- Empfänger umfasst, zur Ermittlung des aktuellen Ortes des Fahrzeuges, mit einer Speichereinrichtung zur Speicherung zumindest einer Hinweisnachricht, mit einer Eingabeeinrichtung zur Auslösung der Zuordnung einer abgespeicherten Hinweisnachricht zu einem Ort, und mit einer Ausgabeeinrichtung zur Ausgabe einer Hinweisnachricht,. Eine Steuereinrichtung, welche mit den genannten Komponenten zusammenwirkt oder verbunden ist, ist derart eingerichtet, dass die einem Ort zugeordnete Hinweisnachricht automatisch ausgegeben wird, wenn sich das Fahrzeug an diesem Ort befindet, und wenn ein weiteres fahrzeugbezogenes Kriterium erfüllt ist, wobei das fahrzeugbezogene Kriterium durch das Unterschreiten eines vorgegebenen Tankfüllstandes und/oder durch das Vorliegen einer bestimmten Sitzbelegung bestimmt ist.

Vorzugsweise wird mittels der Ortsermittlungseinrichtung oder mittels einer Fahrtrichtungsermittlungseinrichtung die aktuelle Fahrtrichtung ermittelt.

Im Folgenden wird die Erfindung anhand von Beispielen unter Bezugnahme auf die folgenden Figuren näher erläutert:
- Figur 1: zeigt ein schematisches Blockschaltbild eines Fahrzeugs mit Ortsermittlungseinrichtung;
- Figur 2:: zeigt ein Ablaufdiagramm eines Verfahrens zur Ausgabe einer Hinweisnachricht in einem Fahrzeug.

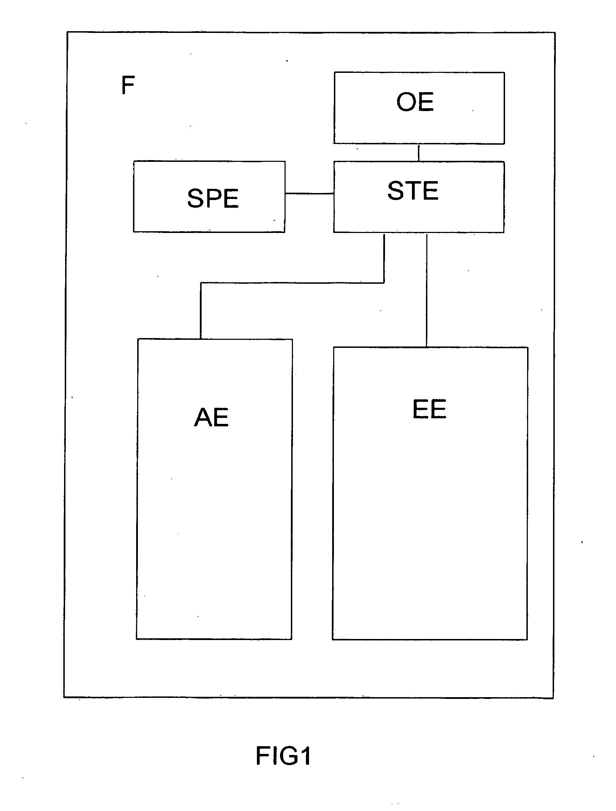

Figur 1 zeigt ein Fahrzeug F mit einer Ortsermittlungseinrichtung OE, die beispielsweise auf einem satellitengestützten Positionsermittlungssystem basiert, und die Bestandteil eines im Fahrzeug F integrierten Navigationssystems sein kann. Die Ortsermittlungseinrichtung OE ermittelt während der Fahrt automatisch und kontinuierlich den Ort und die Fahrtrichtung des Fahrzeuges F.

Zudem ist eine Eingabeeinrichtung EE, die ein Betätigungselement, wie eine Taste, einen Drehknopf, einen Druckknopf, einen Hebel oder eine Wippe, umfassen kann, vorgesehen. Mittels der Eingabeeinrichtung EE kann der Fahrer oder ein anderer Fahrzeuginsasse die Auswahl oder Eingabe einer Hinweisnachricht vornehmen, einen Ort auswählen oder eingeben und die Zuordnung von Ort zu Hinweisnachricht, die an dem Ort auszugeben ist, auslösen, insbesondere die Speicherung dieser Zuordnung bewirken.

Über eine Ausgabeeinrichtung AE, wie einen Lautsprecher, ein Display oder eine Signalleuchte kann die Hinweisnachricht ausgegeben werden.

In einer Speichereinrichtung SPE, wie einem halbleiterbasierten Speicherelement, können die eingegebenen oder vorgegebenen Hinweisnachrichten, Orte, Fahrtrichtungen und Zuordnungen zwischen Orten, Fahrtrichtungen und Hinweisnachrichten in entsprechend codierter Form abgespeichert sein. Auch ein Nachrichtengenerator, ein Signalspeicher oder ein Signalgenerator wird im Rahmen der Erfindung als Speichereinrichtung bezeichnet.

Eine Steuereinrichtung STE koppelt die genannten Komponenten miteinander, steuert die Komponenten an und steuert die im Weiteren erläuterten Verfahrensschritte. Die Steuereinrichtung STE kann als programmgesteuerte Prozessoreinrichtung oder als anwendungsspezifische integrierte Schaltung ausgeführt sein, und ist dabei derart ausgestaltet, dass die einem Ort und einer Fahrtrichtung zugeordnete Hinweisnachricht automatisch ausgegeben wird, wenn sich das Fahrzeug an dem entsprechenden Ort in der entsprechenden Fahrtrichtung befindet.

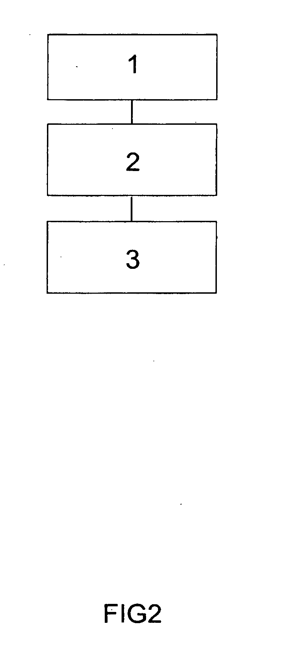

In Figur 2 ist ein Verfahren zur Ausgabe einer Hinweisnachricht exemplarisch dargestellt.

In einem ersten Schritt 1 speichert ein Fahrer eine Hinweisnachricht, beispielsweise über eine Audionachrichtenaufnahmeeinrichtung (Eingabeeinrichtung) in der Speichereinrichtung ab. Beispielsweise spricht er nach Betätigen eines entsprechenden Betätigungselementes die Hinweisnachricht "Tankstelle", worauf entsprechend codierte Informationen in der Speichereinrichtung abgespeichert werden.

In einem zweiten Schritt 2 betätigt der Fahrer während der Fahrt auf seiner gewohnten Fahrroute an einer Abzweigung, welche abweichend von seiner gewohnten Fahrroute zu seiner gewohnten Tankstelle führt, ein Betätigungselement, worauf der aktuelle Ort des Fahrzeuges (Abzweigung zur Tankstelle), beispielsweise in der Form von Koordinaten, und die aktuelle Fahrrichtung des Fahrzeuges der Hinweisnachricht "Tankstelle" zugeordnet wird und diese Zuordnung in der Speichereinrichtung abgespeichert wird. Sind mehrere Hinweisnachrichten in der Speichereinrichtung abgespeichert, wählt der Fahrer die Hinweisnachricht "Tankstelle" aus, welche dem aktuellen Ort des Fahrzeuges (Abzweigung zur Tankstelle) zuzuordnen ist.

Alternativ dazu wird der Hinweisnachricht ein Ort zugeordnet abgespeichert, welcher zum aktuellen Ort des Fahrzeuges (Abzweigung zur Tankstelle) in einem vorgegebenen örtlichen oder zeitlichen Bezug (beispielsweise in Fahrtrichtung 200 Meter vor der Abzweigung zur Tankstelle) steht.

Besonders bevorzugt ist eine Ausführungsvariante, bei der die ersten beiden Schritte zusammen durch die nur einmalige Betätigung eines Betätigungselementes ausgelöst werden. Die Betätigung eines Betätigungselementes startet also die Aufnahmeeinrichtung zur Aufnahme oder Speicherung der Hineisnachricht und löst die Zuordnung der darauf durch den Fahrer gesprochenen Hinweisnachricht zu dem aktuellen Ort oder zu dem Ort aus, welcher zum aktuellen Ort des Fahrzeuges in einem vorgegebenen örtlichen oder zeitlichen Bezug steht.

In einem dritten Schritt 3 wird während der Fahrt auf der genannten gewohnten Strecke, beispielsweise eine Woche später, die Hinweisnachricht "Tankstelle" automatisch über Lautsprecher ausgegeben, wenn sich das Fahrzeug in der Nähe des Ortes oder an dem Ort befindet, welcher der Hinweisnachricht "Tankstelle" zugeordnet abgespeichert ist, und wenn sich das Fahrzeug in der Fahrtrichtung bewegt, welche der Hinweisnachricht "Tankstelle" zugeordnet abgespeichert ist. Dadurch wird der Fahrer daran erinnert, erforderlichenfalls die Abzweigung zur Tankstelle zu befahren. Ob sich das Fahrzeug an dem entsprechenden Ort oder in der Nähe des entsprechenden Ortes befindet, kann über eine Distanzbestimmung zwischen dem aktuellen Ort und dem der Hinweisnachricht zugeordneten Ort und einen Vergleich der ermittelten Distanz mit einem vorgegebenen Schwellwert erfolgen.

Erfindungsgemäß eine automatische Ausgabe einer Hinweisnachricht nicht nur von dem aktuellen Ort des Fahrzeuges und/oder der aktuellen Fahrtrichtung des Fahrzeuges ausgeführt, sondern auch von der Erfüllung eines weiteren fahrzeugbezogenen, umgebungsbezogenen oder zeitbezogenen Kriteriums, wie beispielsweise
- dem Unterschreiten eines vorgegebenen Tankfüllstandes,
- dem Vorliegen eines bestimmten Wochentages,
- dem Vorliegen einer bestimmten Uhrzeit,
- dem Vorliegen eines bestimmten Temperaturbereiches,
- dem Vorliegen eines bestimmten Helligkeitsbereichs,
- dem Vorliegen einer bestimmten Sitzbelegung, oder
- dem Vorliegen einer bestimmten Kombination der genannten Kriterien abhängt.

Dazu werden vorzugsweise bei Betätigung des Betätigungselementes automatisch der aktuelle diesem Kriterium zugrunde liegende Parameter oder die aktuellen diesen Kriterien zugrunde liegenden Parameter erfasst und der Hinweisnachricht zugeordnet abgespeichert.

Befindet sich dann das Fahrzeug später an einem Ort und in einer Fahrtrichtung, welche einer Hinweisnachricht zugeordnet sind, wird mittels einer Erfassung der entsprechenden Parameter überprüft, ob das weitere der Hinweisnachricht zugeordnete Kriterium oder die weiteren der Hinweisnachricht zugeordneten Kriterien erfüllt sind, und die Hinweisnachricht nur dann ausgegeben, wenn das oder die Kriterien erfüllt sind.

Beispielsweise wird der Fahrer nur dann an die Abzweigung zu seiner Tankstelle erinnert, wenn sich das Fahrzeug in der Nähe der Abzweigung befindet, und zudem der Tankfüllstand einen vorgegebenen Schwellwert unterschritten hat.

## Patentansprüche

1. Verfahren zur Ausgabe einer Hinweisnachricht in einem Fahrzeug (F),
- bei dem eine Hinweisnachricht abgespeichert ist,
- bei dem der aktuelle Ort des Fahrzeuges ermittelt wird,
- bei dem ein Fahrer des Fahrzeuges eine Zuordnung einer abgespeicherten Hinweisnachricht zu einem Ort auslöst (2), und
- bei dem die einem Ort zugeordnete Hinweisnachricht automatisch ausgegelben wird, wenn sich das Fahrzeug (F) an diesem Ort befindet, und wenn ein weiteres fahrzeugbezogenes Kriterium erfüllt ist,
wobei das fahrzeugbezogene Kriterium durch das Unterschreiten eines vorgegebenen Tankfüllstandes und/oder durch das Vorliegen einer bestimmten Sitzbelegung bestimmt ist.

2. Verfahren nach Anspruch 1,
- bei dem die Hinweisnachricht durch den Fahrer des Fahrzeuges (F) generiert, eingegeben oder ausgewählt wird.

3. Verfahren nach einem der vorhergehenden Ansprüche,
- bei dem die Zuordnung einer Hinweisnachricht zu einem aktuell ermittelten Ort des Fahrzeuges durch den Fahrer während der Fahrt durch die Betätigung eines Betätigungselementes ausgelöst wird.

4. Verfahren nach einem der vorhergehenden Ansprüche,
- bei dem die Zuordnung einer Hinweisnachricht zu einem Ort, der in einem vorgegebenen örtlichen oder zeitlichen Bezug zu einem aktuell ermittelten Ort des Fahrzeuges steht, durch den Fahrer während der Fahrt durch die Betätigung eines Betätigungselementes ausgelöst wird.

5. Verfahren nach einem der Ansprüche 1 oder 2,
- bei dem die Zuordnung einer Hinweisnachricht zu einem über eine Eingabeeinrichtung eingegebenen Ort des Fahrzeuges erfolgt.

6. Verfahren nach einem der vorhergehenden Ansprüche,
- bei dem eine Fahrtrichtung des Fahrzeuges (F) ermittelt wird,
- bei dem ein Fahrer des Fahrzeuges (F) eine Zuordnung einer abgespeicherten Hinweisnachricht zu einem Ort und einer Fahrtrichtung auslöst, und
- bei dem die einem Ort und einer Fahrtrichtung zugeordnete Hinweisnachricht automatisch ausgegeben wird, wenn sich das Fahrzeug (F) an diesem Ort und in dieser Fahrtrichtung befindet.

7. Fahrzeug (F)
- mit einer Ortsermittlungseinrichtung (OE) zur Ermittlung des aktuellen Ortes des Fahrzeuges,
- mit einer Speichereinrichtung (SPE) zur Speicherung einer Hinweisnachricht,
- mit einer Eingabeeinrichtung (EE) zur Auslösung der Zuordnung einer abgespeicherten Hinweisnachricht zu einem Ort,
- mit einer Ausgabeeinrichtung (AE) zur Ausgabe einer Hinweisnachricht, und
- mit einer Steuereinrichtung (STE), die derart eingerichtet ist, dass die einem Ort zugeordnete Hinweisnachricht automatisch ausgegeben wird, wenn sich das Fahrzeug (F) an dem Ort befindet, und wenn ein weiteres fahrzeugbezogenes Kriterium erfüllt ist,
wobei das fahrzeugbezogene Kriterium durch das Unterschreiten eines vorgegebenen Tankfüllstandes und/oder durch das Vorliegen einer bestimmten Sitzbelegung bestimmt ist.

## Claims

1. A method for emitting a message in a vehicle (F),
- wherein a message is stored,
- wherein the current location of the vehicle is determined,
- wherein a driver of the vehicle triggers (2) an assignment of a stored message to a location, and
- wherein the message assigned to a location is automatically emitted when the vehicle (F) is located at this location, and when a further vehicle-related criterion is fulfilled, wherein the vehicle-related criterion is determined by falling below a predetermined tank filling level and/or by the presence of a specific seat occupation.

2. A method according to claim 1,
- wherein the message is generated, input or selected by the driver of the vehicle (F).

3. A method according to any one of the preceding claims,
- wherein the assignment of a message to a currently determined location of the vehicle is triggered by the driver during the journey by actuating an actuating element.

4. A method according to any one of the preceding claims,
- wherein the assignment of a message to a location, which has a predetermined local or time reference to a currently determined location of the vehicle, is triggered by the driver during the journey by actuating an actuating element.

5. A method according to either of claims 1 or 2,
- wherein the assignment of a message takes place to a location of the vehicle input by an input device.

6. A method according to any one of the preceding claims,
- wherein a travel direction of the vehicle (F) is determined,
- wherein a driver of the vehicle (F) triggers an assignment of a stored message to a location and a travel direction, and
- wherein the message assigned to a location and a travel direction is automatically output when the vehicle (F) is located at this location and in this travel direction.

7. A vehicle (F)
- with a location determining device (OE) for determining the current location of the vehicle,
- with a memory device (SPE) for storing a message,
- with an input device (EE) for triggering the assignment of a stored message to a location,
- with an output device (AE) for outputting a message, and
- with a control device (STE), which is set up in such a way that the message assigned to a location is automatically output when the vehicle (F) is at the location, and when a further vehicle-related criterion is fulfilled, wherein the vehicle-related criterion is determined by falling below a predetermined tank filling level and/or by the presence of a specific seat occupation.

## Revendications

1. Procédé d'émission d'un message d'information dans un véhicule (F), selon lequel :
un message d'information est enregistré,
la localisation actuelle du véhicule est détectée,
le conducteur du véhicule déclenche une association d'un message d'information enregistré à un lieu (2), et
le message d'information associé à un lieu est automatiquement émis lorsque le véhicule (F) se trouve dans ce lieu et qu'un autre critère lié au véhicule est rempli,
ce critère lié au véhicule étant défini par le dépassement vers le bas d'un niveau prédéfini dans le réservoir et/ou par la présence d'une occupation de siège déterminée.

2. Procédé conforme à la revendication 1,
selon lequel le message d'information est généré, entré ou choisi par le conducteur du véhicule (F).

3. Procédé conforme à une des revendications précédentes selon lequel l'association d'un message d'information a un lieu du véhicule actuellement détecté est déclenchée par le conducteur pendant le déplacement par l'actionnement d'un élément de commande.

4. Procédé conforme à l'une des revendications précédentes selon lequel l'association d'un message d'information a un lieu qui est dans une relation locale ou chronologique prédéfinie avec le lieu actuellement détecté du véhicule et déclenchée par le conducteur pendant le déplacement par l'actionnement d'un élément de commande.

5. Procédé conforme à l'une des revendications 1 et 2,
selon laquelle on associe un message d'information à un lieu du véhicule entré par un dispositif d'entrée.

6. Procédé conforme à l'une des revendications précédentes selon lequel
la direction de déplacement du véhicule (F) est détectée,
le conducteur du véhicule (F) déclenche l'association d'un message d'information enregistré à un lieu et à une direction de déplacement, et le message d'information associé à un lieu et à un sens de déplacement est automatiquement émis lorsque le véhicule (F) se trouve dans ce lieu avec ce sens de déplacement.

7. Véhicule (F) comprenant :
un dispositif de détection de lieu (OE) pour permettre de détecter le lieu actuel du véhicule,
un dispositif d'entrée (SPE) permettant d'enregistrer un message d'information,
un dispositif d'entrée (EE) permettant de déclencher l'association d'un message d'information enregistré à un lieu,
un dispositif d'émission (AE) permettant d'émettre un message d'information, et
un dispositif de commande (STE) réalisé de sorte que le message d'information associé à un lieu soit automatiquement émis lorsque le véhicule (F) se trouve dans ce lieu et lorsqu'un autre critère lié au véhicule est rempli, ce critère lié au véhicule étant défini par le dépassement par le bas d'un niveau prédéfini dans le réservoir et/ou par la présence d'une occupation de siège déterminée.
